# EUROPÄISCHE PATENTSCHRIFT

(11) **EP 2 226 571 B1**
(45) Veröffentlichungstag und Bekanntmachung des Hinweises auf die Patenterteilung: **17.02.2016**
(21) Anmeldenummer: 09075104.1
(22) Anmeldetag: 06.03.2009
(51) Int. Cl.: F24D 17/00, F24D 19/10, F24H 7/04

(54) **Anordnung und Verfahren zum Erwärmen von Trinkwasser für eine Verbrauchs- bzw. Zapfstelle**
Assembly and method for warming drinking water for a usage or tapping point
Agencement et procédé de chauffage d'eau potable pour un site de consommation, respectivement, de distribution

(43) Veröffentlichungstag der Anmeldung: 08.09.2010
(73) Patentinhaber: Gerdes OHG, 21337 Lüneburg (DE)
(72) Erfinder: Koch, Christian, 21403 Wendish Evern (DE); Meierle Jakob, 21391 Reppenstedt (DE)
(74) Vertreter: Stork Bamberger

(56) Entgegenhaltungen:
- EP-A- 1 577 615
- AT-A2- 505 443
- DE-A1- 2 821 793
- DE-A1- 10 251 336
- FR-A- 2 444 893
- GB-A- 2 293 438

## Beschreibung

Die Erfindung betrifft eine Anordnung zum Erwärmen von Trinkwasser für mindestens eine Verbrauchs- bzw. Zapfstelle, umfassend eine Frischwasserstation mit einem Zulauf für kaltes Trinkwasser T_{K}, eine Heizeinrichtung zum Erwärmen eines Wärme übertragenden Mediums, eine Pumpe zur Zirkulation des durch die Heizeinrichtung erwärmten Mediums durch die Frischwasserstation, einen Wärmetauscher innerhalb der Frischwasserstation zum Übertragen der durch die Heizeinrichtung erzeugten Wärme auf das kalte Trinkwasser T_{K}, sowie einen in Strömungsrichtung des bereits erwärmten Trinkwassers T_{W} hinter der Frischwasserstation angeordneten Durchlauferhitzer mit einer Steuer- und Regeleinheit zum Steuern und/oder Regeln der Temperatur des Trinkwassers. Des Weiteren betrifft die Erfindung ein Verfahren zum Erwärmen von Trinkwasser für mindestens eine Verbrauchs- bzw. Zapfstelle, umfassend die Schritte: Zuführten von kaltem Trinkwasser T_{K} in eine Frischwasserstation, Erwärmen eines Wärme übertragenden Mediums mittels einer Heizeinrichtung, Zirkulieren des erwärmten Mediums durch die Frischwasserstation mittels einer Pumpe, Übertragen der Wärme auf das Trinkwasser T_{K} mittels eines Wärmetauschers, und Steuern und/oder Regeln der Trinkwassertemperatur mittels eines Durchlauferhitzers.

Solche Anordnungen und Verfahren kommen sowohl in Privathaushalten als auch in gewerblichen oder industriellen Einrichtungen sowie in allen sonstigen Bereichen, in denen Trinkwasser, das auch als Brauchwasser oder Frischwasser bezeichnet werden kann, mit einer gewünschten Wassertemperatur benötigt wird, zum Einsatz. Rein beispielhaft ist die Verbrauchs- bzw. Zapfstelle eine Dusche, die auf Anforderung/Wunsch des Nutzers 40°C warmes Wasser liefern soll. Es ist bekannt, dass das Trinkwasser durch eine Heizeinrichtung, nämlich z.B. einen Solarspeicher als primäre Wärmequelle, auf eine gewünschte Temperatur erwärmt wird. Selbstverständlich kann die Heizeinrichtung auch eine Gas- oder Ölheizung oder jede andere bekannte Wärmequelle sein. Bei mangelnder Leistungsfähigkeit der Heizeinrichtung, am Beispiel des Solarspeichers in Zeiten geringer oder fehlender Sonneneinstrahlung fällt die Temperatur in dem Solarspeicher unter den gewünschten Temperaturwert ab, so dass so genannten Nachheiz-Systeme zum Einsatz kommen, die die fehlende Energie zur Erreichung der gewünschten Erwärmung liefern. Diese Nachheizung wird in der Praxis häufig durch eine zentrale, mit fossilen Brennstoffen betriebene Heizung realisiert. Diese Systeme heizen den Wasservorrat in dem Solarspeicher auf die Sollwerttemperatur. Diese Systeme haben sich jedoch als unwirtschaftlich herausgestellt, da stets der gesamte Speicherinhalt oder Teile des Speicherinhaltes auf Vorrat auf die Sollwerttemperatur aufgeheizt werden, weswegen der Einsatz von Durchlauferhitzern zum Nachheizen zu bevorzugen ist, da die Durchlauferhitzer nur das tatsächlich entnommene Trinkwasser auf den Sollwert aufheizen. Daher basieren die bekannten Anordnungen und Verfahren mit einem Durchlauferhitzer als Nachheiz-System. Das wird durch den der Frischwasserstation nachgeordneten Durchlauferhitzer erreicht, der die sofortige Erwärmung des Trinkwassers auf den Sollwert vornimmt und somit die Bedarfstemperatur bereitstellt.

Aus der DE 28 21 793 welche als nächstliegender Stand der Technick angesehen wird, ist beispielsweise eine Anlage zur Heißwasserbereitung in Wohnhäusern, Industriewerken und dergleichen bekannt. Die in dem genannten Dokument beschriebene Anlage umfasst eine solarthermische Heizeinrichtung, mittels der das Trinkwasser in der Frischwasserstation erwärmt und dann direkt und/oder über einen Durchlauferhitzer an eine Mischbatterie abgegeben wird. Die Frischwasserstation ist auf einen festen Temperaturwert eingestellt. Sobald die eingestellte Temperatur in der Frischwasserstation unterschritten wird, nimmt der Durchlauferhitzer seine Tätigkeit auf. Dazu erhält der Durchlauferhitzer ein entsprechendes Signal von der Frischwasserstation. Ist die eingestellte Temperatur in der Frischwasserstation höher als die gewünschte Temperatur, muss das aus der Frischwasserstation strömende, zu warme Trinkwasser durch Zugabe von kaltem Trinkwasser gekühlt werden.

Diese Anlage weist mehrere Nachteile auf. Zum einen ist diese Art der Temperatursteuerung/-regelung unwirtschaftlich, da in einigen Anwendungsfällen erwärmtes Wasser wieder abgekühlt werden muss. Zum anderen erfordert die bekannte Anordnung zusätzliche Zirkulationsleitungen, z.B. zum Zuführen von kaltem Trinkwasser an die Mischbatterie, was erhöhten Platz- und Montagebedarf verursacht und höhere Kosten bedeutet. Ein weiterer großer Nachteil besteht darin, dass das Trinkwasser in der Frischwasserstation, die in der Regel einen Wasserspeicher beinhaltet, ggf. über einen längeren Zeitraum steht und auf einem erhöhten Temperaturniveau gehalten wird. Das bedeutet, dass die Gefahr von Keimbildung, z.B. von Legionellen, in der Frischwasserstation bzw. in den Wasserspeichern der Frischwasserstationen besteht. Diese Problematik kann nur dadurch reduziert werden, indem das Trinkwasser in dem Wasserspeicher regelmäßig, auch ohne Bedarf, auf über ca. 60°C erwärmt wird, um die Keime, Bakterien etc. wirksam zu unterdrücken bzw. zu beseitigen. Auch führt diese Art der Steuerung und/oder Regelung zu so genannten Standverlusten. Das bedeutet, dass kontinuierlich Wärmeenergie ungenutzt an die Umgebung abgegeben wird.

Der Erfindung liegt damit die Aufgabe zugrunde, eine kompakte und einfache Anlage zum kosten- und energieeffizienten Erwärmen von Trinkwasser für mindestens eine Verbrauchs- bzw. Zapfstelle zu schaffen. Des Weiteren ist es Aufgabe der vorliegenden Erfindung, ein entsprechendes Verfahren vorzuschlagen.

Diese Aufgabe wird durch eine Anlage der eingangs erwähnten Art dadurch gelöst, dass zwischen dem Durchlauferhitzer und der Frischwasserstation eine direkte Steuer- und/oder Regelsignalverbindung zur Sollwerteinstellung der Temperatur des Trinkwassers in der Frischwasserstation durch den Durchlauferhitzer besteht. Dadurch wird auf überraschend einfache und effektive Weise eine kompakte Anordnung geschaffen, mittels der das der Verbrauchs- bzw. Zapfstelle entnommene Trinkwasser T_{W} stets die gewünschte Temperatur aufweist. Mit der erfindungsgemäßen Ausgestaltung kann auf zusätzliche Zirkulationsleitungen verzichtet werden, was den Aufbau und die Montage erleichtert und damit Kosten spart. Durch die direkte Steuerung der Frischwasserstation über den Durchlauferhitzer wird eine hohe Energieeffizienz erreicht, da das Trinkwasser nur dann und in der Menge tatsächlich erwärmt wird, wenn und wie es angefordert wird.

Eine zweckmäßige Weiterbildung der Erfindung zeichnet sich dadurch aus, dass die Heizeinrichtung zum Erwärmen des Wärme übertragenden Mediums eine primäre Wärmequelle mit einem Speicher für das Medium aufweist, wobei der Speicher, die Pumpe sowie die Zuleitung des Wärme übertragenden Mediums in die Frischwasserstation und die Ableitung des Wärme übertragenden Mediums aus der Frischwasserstation einen geschlossenen Kreislauf für das Medium bilden. Durch dieses geschlossene System wird die Keimbildung z.B. von Legionellen quasi ausgeschlossen, da das in die Frischwasserstation zugeführte Trinkwasser T_{K} und das aus der Frischwasserstation ausströmende Trinkwasser Tw nicht gespeichert wird sondern ohne Kontakt zum gespeicherten Medium durch die Frischwasserstation strömt. Für den Fall, dass Trinkwasser nicht angefordert wird, befindet sich in der Frischwasserstation bzw. in der Zuleitung nur nicht erwärmtes Trinkwasser T_{K}, das nicht zur Keimbildung neigt. Ein weiterer Vorteil besteht darin, dass das in dem Speicher gespeicherte Medium nicht nachgeheizt werden muss, da eine Keimbildung innerhalb des Speichers für das Trinkwasser unerheblich ist.

Vorteilhafterweise sind der Durchlauferhitzer und die Frischwasserstation wahlweise räumlich getrennt ausgebildet oder bilden eine bauliche Einheit. Beide Ausführungsformen weisen Vorteile auf. Eine räumlich getrennte Anordnung kann, angepasst an die jeweiligen örtlichen Gegebenheiten, besonders einfach zu installieren sein. Die integrale Ausbildung von Frischwasserstation und Durchlauferhitzer ist besonders kompakt.

Eine bevorzugte Ausführungsform der Erfindung ist dadurch gekennzeichnet, dass der Durchlauferhitzer in räumlicher Nähe der Verbrauchs- bzw. Zapfstelle angeordnet ist. Der Begriff "räumliche Nähe" beschreibt die direkte Positionierung des Durchlauferhitzers an der Verbrauchs- bzw. Zapfstelle, so dass die Leitungsverluste gering gehalten werden. Konkret kann der Durchlauferhitzer z.B. in der Duschkabine nahe dem Absperrventil der Verbrauchs- bzw. Zapfstelle installiert sein. "Räumliche Nähe" beinhaltet jedoch z.B. auch eine Anordnung des Durchlauferhitzers unter einem Waschbecken.

Die Aufgabe wird auch durch ein eingangs genanntes Verfahren gelöst, das sich dadurch auszeichnet, dass die Sollwerteinstellung der Temperatur des Trinkwassers in der Frischwasserstation durch den Durchlauferhitzer erfolgt. Die sich daraus ergebenden Vorteile wurden bereits im Zusammenhang mit der erfindungsgemäßen Anlage beschrieben, so dass zur Vermeidung von Wiederholungen auf die entsprechenden Passagen verwiesen wird.

Weitere zweckmäßige und/oder vorteilhafte Merkmale und Verfahrensschritte ergeben sich aus den Unteransprüchen und der Beschreibung. Eine besonders bevorzugte Ausführungsform sowie das Verfahrensprinzip werden anhand der beigefügten Zeichnung näher erläutert. In der Zeichnung zeigt:

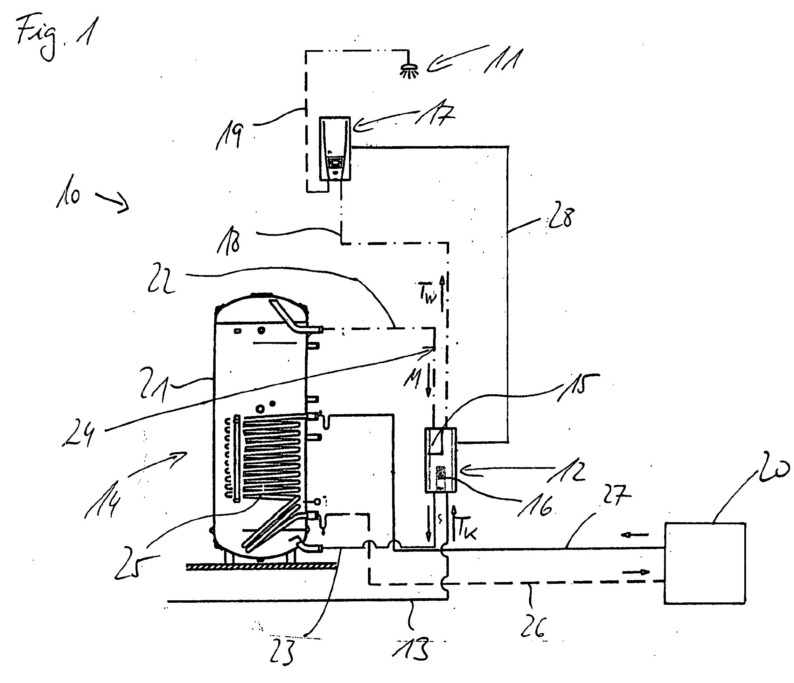

Fig. 1 eine schematische Darstellung einer erfindungsgemäßen Anordnung.

Die in der Zeichnung dargestellte und im Folgenden beschriebene Anordnung dient zum Nachheizen von bereits durch eine solarthermische Heizquelle erwärmtem Trinkwasser. Selbstverständlich kann die Anordnung auch mit anderen primären Heizquellen, wie z.B. Wärmepumpen, Erdwärme, oder mit fossilen Brennstoffen betriebenen Heizungen zusammen wirken.

Die Anordnung 10 zum Erwärmen von Trinkwasser für mindestens eine Verbrauchs- bzw. Zapfstelle 11 umfasst eine Frischwasserstation 12 mit einem Zulauf 13 für nicht erwärmtes, kaltes Trinkwasser T_{K}, eine Heizeinrichtung 14 zum Erwärmen eines Wärme übertragenden Mediums M, eine Pumpe 15 zur Zirkulation des durch die Heizeinrichtung 14 erwärmten Mediums durch die Frischwasserstation 12, einen Wärmetauscher 16 innerhalb der Frischwasserstation 12 zum Übertragen der durch die Heizeinrichtung 14 bereit gestellten Wärme auf das kalte Trinkwasser T_{K}, sowie einen in Strömungsrichtung des bereits erwärmten Trinkwassers T_{W} hinter der Frischwasserstation 12 angeordneten Durchlauferhitzer 17 mit einer Steuer- und/oder Regeleinheit zum Steuern und/oder Regeln der Temperatur des Trinkwassers. Die Anordnung 10 kann aber auch mehr als eine Verbrauchs- bzw. Zapfstelle 11 aufweisen. Die Erfindung wird der Einfachheit halber allerdings anhand einer Verbrauchs- bzw. Zapfstelle 11 beschrieben.

Der Durchlauferhitzer 17 ist zwischen der Frischwasserstation 12 und der Verbrauchs- bzw. Zapfstelle 11 angeordnet und sowohl mit der Frischwasserstation 12 als auch mit der Verbrauchs- bzw. Zapfstelle 11 über mindestens eine Leitung 18 (führt das Trinkwasser T_{W}) bzw. 19 verbunden. Zwischen dem Durchlauferhitzer 17 und der Verbrauchs- bzw. Zapfstelle 11 ist ein (nicht explizit dargestelltes) Absperrventil zum Freigeben oder Sperren des Trinkwasserstroms angeordnet. Alternativ kann dass oder jedes Absperrventil auch an anderer Position, insbesondere auch im Bereich der Leitung 18 angeordnet sein. Zwischen dem Durchlauferhitzer 17 und der Frischwasserstation 12 besteht des Weiteren eine direkte Steuer- und/oder Regelsignalverbindung 28 zur Sollwerteinstellung der Temperatur des Trinkwassers in der Frischwasserstation 12 durch den Durchlauferhitzer 17. Anders ausgedrückt ist die Fischwasserstation 12 mittels des Durchlauferhitzers 17 steuer- und/oder regelbar.

Die Heizeinrichtung 14 zum Erwärmen des Wärme übertragenden Mediums M weist optional eine primäre Wärmequelle 20 mit einem Speicher 21 für das Medium M auf. Als Wärmequelle 20 ist bevorzugt eine solarthermische Heizeinrichtung vorgesehen. Selbstverständlich können auch herkömmliche, mit fossilen Brennstoffen betriebene Heizungen, Wärmepumpen, Erdwärme oder sonstige alternative bzw. regenerative Energiequellen als Wärmequelle 20 dienen. Der Speicher 21 ist üblicherweise ein Tank. Der Speicher 21 kann aber auch als Leitungssystem oder das Medium M in anderer Weise aufnehmendes Gefäß ausgebildet sein. Das Medium M kann fest, gasförmig und bevorzugt flüssig ausgebildet sein. In der beschriebenen und gezeigten Ausführungsform ist das Medium M Wasser. Andere Medien sind aber ebenfalls möglich.

Der Speicher 21, die Pumpe 15 sowie die Zuleitung 22 des Wärme übertragenden Mediums M in die Frischwasserstation 12 und die Ableitung 23 des Wärme übertragenden Mediums M aus der Frischwasserstation 12 bilden einen geschlossenen Kreislauf bzw. ein geschlossenen System 24 für das Medium M. Anders ausgedrückt zirkuliert das Medium M durch den Speicher 21, die Zuleitung 22, die Ableitung 23 sowie die Frischwasserstation 12 ohne Kontakt zum Trinkwasser. In der beschriebenen Ausführungsform ist die Pumpe 15 bevorzugt in der Frischwasserstation 12 angeordnet. Die Pumpe 15 kann aber auch im Speicher 21 oder aber in der Zuleitung 22 und/oder der Ableitung 23 angeordnet bzw. positioniert sein.

Innerhalb des Speichers 21 können optional weitere Wärmetauscher 25 angeordnet sein. In der beschriebenen Ausführungsform ist der Speicher 21 über eine erste Leitung 26 mit der Wärmequelle 20 verbunden. Über diese Leitung wird der Wärmequelle 20 ein Heizmedium zugeführt. Das innerhalb der Wärmequelle 20 erwärmte Heizmedium wird über eine zweite Leitung 27 an den Speicher 21 zurück geführt. Die Anschlüsse der Leitungen 26, 27 sind bevorzugt am Wärmetauscher 25 ausgebildet. Andere Anschlussmöglichkeiten zwischen der Wärmequelle 20 und dem Speicher 21, insbesondere auch ohne Wärmetauscher 25, sind ebenfalls möglich.

Die Steuer- und/oder Regelsignalverbindung 28 zwischen dem Durchlauferhitzer 17 und der Frischwasserstation 12 kann wahlweise eine Kabelverbindung, ein Netzwerk und/oder eine Funkverbindung sein. Die Art der Signalverbindung hängt wesentlich von den räumlichen Gegebenheiten und den Wünschen der Nutzer ab und ist im Rahmen der üblichen Ausführungen umsetzbar. Der Durchlauferhitzer 17 selbst ist direkt über mindestens ein Schaltelement am Durchlauferhitzer 17 oder ebenfalls z.B. über eine Funkversteuerung bedienbar. In der beschriebenen Ausführungsform sind der Durchlauferhitzer 17 und die Frischwasserstation 12 getrennte Einheiten. Anders ausgedrückt ist der Durchlauferhitzer 17 räumlich von der Frischwasserstation 12 getrennt angeordnet. In einem solchen Fall verfügen sowohl der Durchlauferhitzer 17 als auch die Frischwasserstation 12 über eine eigene Steuer- und/oder Regeleinheit. Beim Durchlauferhitzer 17 ist die Steuer- und/oder Regeleinheit bevorzugt zum Steuern und/oder Regeln der Temperatur des Trinkwassers ausgebildet und eingerichtet. Die Steuer- und/oder Regeleinheit der Frischwasserstation 12 ist bevorzugt zum Steuern und/oder Regeln der Drehzahl der Pumpe 15 ausgebildet und eingerichtet.

In einer nicht dargestellten Ausführungsform können der Durchlauferhitzer 17 und die Frischwasserstation 12 auch eine bauliche Einheit bilden. Dazu können der Durchlauferhitzer 17 und die Frischwasserstation 12 übereinander, untereinander, nebeneinander oder in jeder anderen integrierten Weise miteinander kombiniert sein. In diesem Fall kann es besonders bevorzugt sein, eine gemeinsame Steuer- und/oder Regeleinheit vorzusehen, die sowohl die Steuerung und/oder Regelung des Durchlauferhitzers 17 als auch die Steuerung und/oder Regelung der Frischwasserstation 12 übernimmt.

In der gezeigten Ausführungsform ist die Verbrauchs- bzw. Zapfstelle 11 eine Dusche. Der Durchlauferhitzer 17 ist in räumlicher Nähe zu der Verbrauchs- bzw. Zapfstelle 11 angeordnet. Der Abstand zwischen dem Durchlauferhitzer 17 und der Verbrauchs- bzw. Zapfstelle 11 kann aber auch größer ausgewählt werden, insbesondere wenn der Durchlauferhitzer 17 und die Frischwasserstation 12 eine bauliche Einheit bilden. Jede andere Zapfstelle, nämlich z.B. ein Wasserhahn, ein Anschluss für eine Geschirrspülmaschine, eine industrielle Zapfstelle etc., ist aber ebenfalls möglich. Vorzugsweise ist die Anordnung 10 vollständig entkoppelt von der eigentlichen Heizung.

Im Folgenden wird das Verfahrensprinzip mit Hilfe der Figur 1 näher erläutert, wobei rein beispielhaft der Verbrauchs- bzw. Zapfstelle 11 als Dusche 40°C warmes Wasser entnommen werden soll:
Die Sollwerttemperatur von 40°C wird vom Benutzer am Durchlauferhitzer 17 direkt oder ferngesteuert eingegeben. Der Durchlauferhitzer 17 sendet ein entsprechendes Signal an die Frischwasserstation 12. Anders ausgedrückt stellt der Durchlauferhitzer 17 die Sollwerttemperatur des Trinkwassers in der Frischwasserstation 12 über die Steuer- und/oder Regelsignalverbindung ein. Die Signalübertragung kann kabelgebunden, über Netzwerke oder per Funk erfolgen.

Zunächst wird kaltes Trinkwasser T_{K} über den Zulauf 13 in die Frischwasserstation 12 geführt. Das kalte Trinkwasser T_{K} wird in der Frischwasserstation 12 mittels des Wärmetauschers 16 auf die Sollwerttemperatur erwärmt und strömt dann durch die Leitung 18 zum bzw. in den Durchlauferhitzer 17. Zum Erwärmen des kalten Trinkwassers T_{K} wird bzw. wurde in dem Speicher 21 befindliches Medium M, vorzugsweise Wasser, mittels der Wärmequelle 20 erwärmt und von dem Wärmetauscher 25 an das Wasser übertragen. Das derart erwärmte Wasser zirkuliert mittels der Pumpe 15 in dem geschlossenen System 24 und strömt dabei durch die Frischwasserstation 12, quasi an dem kalten Trinkwasser T_{K} vorbei, wodurch dieses beim Durchströmen der Frischwasserstation 12 über den Wärmetauscher 16 erwärmt wird. Durch die Steuerung/Regelung der Drehzahl der Pumpe 15 durch die Frischwasserstation 12 auf das Signal des Durchlauferhitzers 17 hin wird die erforderliche Wärme auf das Trinkwasser T_{K} übertragen, das die Frischwasserstation 12 als erwärmtes Trinkwasser T_{W} verlässt. Beim Öffnen des Absperrventils an der Dusche strömt das erwärmte Trinkwasser T_{W} mit der gewünschten Temperatur (Sollwerttemperatur) aus der Frischwasserstation 12 durch den Durchlauferhitzer 17 aus der Dusche. Solange die Temperatur am Eingang des Durchlauferhitzers 17 unterhalb der Sollwerttemperatur liegt, heizt der Durchlauferhitzer 17 das Trinkwassers T_{W} noch auf die Sollwerttemperatur nach. Sobald die Sollwerttemperatur eingangsseitig am Durchlauferhitzer 17 erreicht ist, wird das Nachheizen eingestellt.

Sollte die von der Wärmequelle 20 erzeugte Wärme nicht ausreichen, das Trinkwasser T_{K} auf die Sollwerttemperatur aufzuheizen, heizt der Durchlauferhitzer 17, nachdem die Einlauftemperatur des Trinkwassers T_{W} in den Durchlauferhitzer 17 ermittelt wurde, das bereits (vor-)erwärmte Trinkwasser T_{W} auf die Sollwerttemperatur. Der Fall, dass an dem Durchlauferhitzer 17 Trinkwasser T_{W} mit einer Temperatur, die über der Sollwerttemperatur liegt, ankommt, ist ausgeschlossen, da bereits die Frischwasserstation 12 durch den Durchlauferhitzer 17 auf die Sollwerttemperatur eingestellt und ggf. die Drehzahl der Pumpe 15 reduziert wird.

Wie bereits erwähnt, wird das die Wärme übertragende Medium durch eine primäre Wärmequelle 20 erwärmt und im Speicher 21 gespeichert. Als primäre Wärmequelle 20 wird bevorzugt eine solarthermische Heizeinrichtung vorgesehen. Besonders eignen sich aber auch Wärmepumpen oder Erdwärme. Selbstverständlich können auch fossile Brennstoffe, wie Gas oder Öl, zur Erzeugung der Wärme verwendet werden. Auch Fern- oder Nahwärme ist als Wärmequelle 20 geeignet. Es besteht alternativ auch die Möglichkeit, das anstelle von Wasser als dem Wärme übertragenden Medium M ein festes Medium durch die primäre Wärmequelle 20 erwärmt wird, das die Wärme auf das durch die Frischwasserstation 12 strömende Trinkwasser überträgt. Das Medium M kann in einer weiteren besonderen Ausführungsform nämlich z.B. durch ein Phase-Change-Medium, z.B. Parafin gebildet sein, wie dies in der DE 10 2006 057 845 A1 beschrieben ist. Dann benötigt man dazu einen weiteren Wärmetauscher 25 im Speicher 21 innerhalb des geschlossenen Systems 24. Für einen Fall, dass kein Durchlauferhitzer 17 montiert ist, kann die Sollwerteinstellung für die Temperatur des Trinkwassers auch direkt an die Frischwasserstation 12 übertragen werden, beispielsweise über Funk, Kabel oder Netzwerk.

Wie weiter oben beschrieben, ist die Anordnung 10 bevorzugt von der eigentlichen zentralen Heizung entkoppelt. Das bedeutet, dass Warmwassererzeugung und Heizung zwei unterschiedliche Systeme sind. Selbstverständlich kann das System zur Warmwassererzeugung auch in das Heizungssystem eingebunden sein. Auch Kombinationen der genannten primären Wärmequellen 20 und die unterschiedliche Anbindung an verschiedene Positionen, als z.B. direkt an die Frischwasserstation 12, direkt an den Speicher 21 etc. sind möglich. In einer weiteren erfindungsgemäßen Ausführungsform kann die Frischwasserstation 12 auch aus diskreten Komponenten, wie z.B. Pumpe, Wärmetauscher, Durchflusssensoren, Temperatursensoren und einer Steuerung aufgebaut sein. Mit anderen Worten muss die Frischwasserstation 12 nicht als eine Einheit gebildet sein.

Durch die erfindungsgemäße Anordnung 10 und die damit erreichte bedarfsgesteuerte Erwärmung des tatsächlich entnommenen Trinkwassers können Wärmeverluste des Speichers 21 vermieden werden. Durch die Kombination der Frischwasserstation 12 mit einem Durchlauferhitzer 17 kann der gesamte Speicherinhalt des Speichers 21 zum Heizen des Trinkwassers genutzt werden.

## Patentansprüche

1. Anordnung (10) zum Erwärmen von Trinkwasser für mindestens eine Verbrauchs- bzw. Zapfstelle (11), umfassend eine Frischwasserstation (12) mit einem Zulauf (13) für kaltes Trinkwasser T_{K}, eine Heizeinrichtung (14) zum Erwärmen eines Wärme übertragenden Mediums M, eine Pumpe (15) zur Zirkulation des durch die Heizeinrichtung (14) erwärmten Mediums M durch die Frischwasserstation (12), einen Wärmetauscher (16) innerhalb der Frischwasserstation (12) zum Übertragen der durch die Heizeinrichtung (14) erzeugten Wärme auf das kalte Trinkwasser T_{K}, sowie einen in Strömungsrichtung des bereits erwärmten Trinkwassers T_{W} hinter der Frischwasserstation (12) angeordneten Durchlauferhitzer (17) mit einer Steuer- und Regeleinheit zum Steuern und/oder Regeln der Temperatur des Trinkwassers, wobei zwischen dem Durchlauferhitzer (17) und der Frischwasserstation (12) eine direkte Steuer- und/oder Regelsignalverbindung (28) besteht, **dadurch gekennzeichnet, dass** die direkte Steuer- und/oder Regelsignalverbindung (28) zur Sollwerteinstellung der Temperatur des Trinkwassers in der Frischwasserstation (12) durch den Durchlauferhitzer (17) besteht.

2. Anordnung nach Anspruch 1, **dadurch gekennzeichnet, dass** die Heizeinrichtung (14) zum Erwärmen des Wärme übertragenden Mediums M eine primäre Wärmequelle (20) mit einem Speicher (21) für das Medium M aufweist.

3. Anordnung nach Anspruch 2, **dadurch gekennzeichnet, dass** der Speicher (21), die Pumpe (15) sowie die Zuleitung (22) des Wärme übertragenden Mediums M in die Frischwasserstation (12) und die Ableitung (23) des Wärme übertragenden Mediums M aus der Frischwasserstation (12) einen geschlossenen Kreislauf für das Medium M bilden.

4. Anordnung nach Anspruch 2 oder 3, **dadurch gekennzeichnet, dass** die Pumpe (15) wahlweise dem Speicher (21) oder der Frischwasserstation (12) zugeordnet ist.

5. Anordnung nach einem der Ansprüche 1 bis 4, **dadurch gekennzeichnet, dass** die Steuer- und/oder Regelsignalverbindung (28) zwischen dem Durchlauferhitzer (27) und der Frischwasserstation (12) wahlweise eine Kabelverbindung, ein Netzwerk und/oder eine Funkverbindung ist.

6. Anordnung nach einem der Ansprüche 1 bis 5, **dadurch gekennzeichnet, dass** der Durchlauferhitzer (17) und die Frischwasserstation (12) wahlweise räumlich getrennt ausgebildet sind oder eine bauliche Einheit bilden.

7. Anordnung nach einem der Ansprüche 2 bis 6, **dadurch gekennzeichnet, dass** dem Speicher (21) mindestens ein zusätzlicher Wärmetauscher (25) zugeordnet ist.

8. Anordnung nach einem der Ansprüche 1 bis 7, **dadurch gekennzeichnet, dass** der Durchlauferhitzer (17) in räumlicher Nähe der Verbrauchs- bzw. Zapfstelle (11) angeordnet ist.

9. Verfahren zum Erwärmen von Trinkwasser für mindestens eine Verbrauchsbzw. Zapfstelle (11) mittels einer Anordnung zum Erwärmen von Trinkwasser nach Anspruch 1, umfassend die Schritte:
- Zuführen von kaltem Trinkwasser T_{K} in eine Frischwasserstation (12),
- Erwärmen eines Wärme übertragenden Mediums M mittels einer Heizeinrichtung (14),
- Zirkulieren des erwärmten Mediums M durch die Frischwasserstation (12) mittels einer Pumpe (15),
- Übertragen der Wärme auf das Trinkwasser T_{K} mittels eines Wärmetauschers (16), und
- Steuern und/oder Regeln der Temperatur des Trinkwassers mittels eines Durchlauferhitzers (17),
**dadurch gekennzeichnet, dass** die Sollwerteinstellung der Temperatur des Trinkwassers in der Frischwasserstation (12) durch den Durchlauferhitzer (17) erfolgt.

10. Verfahren nach Anspruch 9, **dadurch gekennzeichnet, dass** die Frischwasserstation (12) auf der Basis des Sollwertes die Drehzahl der Pumpe (15) steuert und/oder regelt.

11. Verfahren nach Anspruch 9 oder 10, **dadurch gekennzeichnet, dass** das Wärme übertragende Medium M durch eine primäre Wärmequelle (20) erwärmt und in einem Speicher gespeichert wird.

12. Verfahren nach einem der Ansprüche 9 bis 11, **dadurch gekennzeichnet, dass** das Wärme übertragende Medium M in einem geschlossenen Kreislauf zirkuliert.

13. Verfahren nach einem der Ansprüche 9 bis 12, **dadurch gekennzeichnet, dass** die Eingangstemperatur des bereits erwärmten Trinkwassers T_{W} am Eingang des Durchlauferhitzers (17) gemessen und zur Ermittlung der Sollwerteinstellung verarbeitet wird.

14. Verfahren nach einem der Ansprüche 9 bis 13, **dadurch gekennzeichnet, dass** die Steuer- und/oder Regelsignale zwischen dem Durchlauferhitzer (17) und der Frischwasserstation (12) wahlweise über eine direkte Kabelverbindung, ein Netzwerk und/oder eine Funkverbindung übertragen werden.

15. Verfahren nach einem der Ansprüche 9 bis 14, **dadurch gekennzeichnet, dass** der Durchlauferhitzer (17) wahlweise über eine Funkfernbedienung, ein Kabel und/oder ein Netzwerk bedient wird.

## Claims

1. Arrangement (10) for heating drinking water for at least one consumption point or tapping point (11), comprising a fresh water station (12) having an inlet (13) for cold drinking water T_{K}, a heating device (14) for heating a heat-transfer medium M, a pump (15) for circulation of the medium (M) heated by the heating device (14) through the fresh water station (12), a heat exchanger (16) within the fresh water station (12) for transfer of the heat generated by the heating device (14) to the cold drinking water T_{K}, and an instantaneous water heater (17) arranged behind the fresh water station (12) in the direction of flow of the already heated drinking water T_{W}, having a control and regulating unit for controlling and/or regulating the temperature of the drinking water, wherein between the instantaneous water heater (17) and the fresh water station (12) there is a direct control and/or regulating signal link (28), **characterised in that** the direct control and/or regulating signal link (28) is for nominal value adjustment of the temperature of the drinking water in the fresh water station (12) by the instantaneous water heater (17).

2. Arrangement according to claim 1, **characterised in that** the heating device (14) for heating the heat-transfer medium M has a primary heat source (20) with a storage unit (21) for the medium M.

3. Arrangement according to claim 2, **characterised in that** the storage unit (21), the pump (15) and the pipe (22) for supplying the heat-transfer medium M to the fresh water station (12) and the pipe (23) for discharging the heat-transfer medium M from the fresh water station (12) form a closed circuit for the medium M.

4. Arrangement according to claim 2 or 3, **characterised in that** the pump (15) is optionally assigned to the storage unit (21) or the fresh water station (12).

5. Arrangement according to any of claims 1 to 4, **characterised in that** the control and/or regulating signal link (28) between the instantaneous flow heater (27) and the fresh water station (12) is optionally a cable link, a network and/or a wireless link.

6. Arrangement according to any of claims 1 to 5, **characterised in that** the instantaneous water heater (17) and the fresh water station (12) are optionally designed to be spatially separate or form a structural unit.

7. Arrangement according to any of claims 2 to 6, **characterised in that** at least one additional heat exchanger (25) is assigned to the storage unit (21).

8. Arrangement according to any of claims 1 to 7, **characterised in that** the instantaneous water heater (17) is arranged in the spatial vicinity of the consumption point or tapping point (11).

9. Method for heating drinking water for at least one consumption point or tapping point (11) by means of an arrangement for heating drinking water according to claim 1, comprising the steps of:
- delivering cold drinking water T_{K} to a fresh water station (12),
- heating a heat-transfer medium M by means of a heating device (14),
- circulating the heated medium M through the fresh water station (12) by means of a pump (15),
- transferring the heat to the drinking water T_{K} by means of a heat exchanger (16), and
- controlling and/or regulating the temperature of the drinking water by means of an instantaneous water heater (17),
**characterised in that** nominal value adjustment of the temperature of the drinking water in the fresh water station (12) is effected by the instantaneous water heater (17).

10. Method according to claim 9, **characterised in that** the fresh water station (12) controls and/or regulates the speed of rotation of the pump (15) on the basis of the nominal value.

11. Method according to claim 9 or 10, **characterised in that** the heat-transfer medium M is heated by a primary heat source (20) and stored in a storage unit.

12. Method according to any of claims 9 to 11, **characterised in that** the heat-transfer medium M circulates in a closed circuit.

13. Method according to any of claims 9 to 12, **characterised in that** the input temperature of the already heated drinking water T_{W} is measured at the input of the instantaneous water heater (17) and processed to determine the nominal value adjustment.

14. Method according to any of claims 9 to 13, **characterised in that** the control and/or regulating signals between the instantaneous water heater (17) and the fresh water station (12) are optionally transmitted via a direct cable link, a network and/or a wireless link.

15. Method according to any of claims 9 to 14, **characterised in that** the instantaneous water heater (17) is optionally operated by wireless remote control, a cable and/or a network.

## Revendications

1. Dispositif (10) pour le réchauffement d'eau potable pour au moins un point de débit ou de tirage (11), comprenant une station d'eau fraîche (12) avec une arrivée (13) pour de l'eau potable froide T_{K}, un dispositif de chauffage (14) pour le réchauffement d'un médium caloporteur M, une pompe (15) pour la circulation du moyen M, réchauffé par le dispositif de chauffage (14), par la station d'eau fraîche (12), un échangeur de chaleur (16) à l'intérieur de la station d'eau fraîche (12) pour le transfert de la chaleur produite par le dispositif de chauffage (14) à l'eau potable froide T_{K}, ainsi qu'un chauffe-eau instantané (17) disposé en aval de la station d'eau fraîche (12), vu par rapport à la direction de flux de l'eau potable déjà réchauffée T_{W}, avec une unité de commande et de régulation pour la commande et/ou le réglage de la température de l'eau potable, une liaison directe de signal de commande et/ou de régulation (28) existant entre le chauffe-eau instantané (17) et la station d'eau fraîche (12),
**caractérisé en ce que** la liaison directe de signal de commande et/ou de régulation (28) existe pour l'ajustement d'une valeur de consigne de la température de l'eau potable dans la station d'eau fraîche (12) par le chauffe-eau instantané (17).

2. Dispositif selon la revendication 1, **caractérisé en ce que** le dispositif de chauffage (14) pour le réchauffement du médium caloporteur M comprend une source de chaleur primaire (20) avec un réservoir (21) pour le médium M.

3. Dispositif selon la revendication 2, **caractérisé en ce que** le réservoir (21), la pompe (15) ainsi que l'amenée (22) du médium caloporteur M dans la station d'eau fraîche (12) et l'évacuation (23) du médium caloporteur M de la station d'eau fraîche (12) forment un circuit fermé pour le médium M.

4. Dispositif selon la revendication 2 ou 3, **caractérisé en ce que** la pompe (15) est associée sélectivement au réservoir (21) ou à la station d'eau fraîche (12).

5. Dispositif selon l'une quelconque des revendications 1 à 4, **caractérisé en ce que** la liaison directe de signal de commande et/ou de régulation (28) entre le chauffe-eau instantané (17) et la station d'eau fraîche (12) est sélectivement une liaison câblée, un réseau et/ou une liaison radio.

6. Dispositif selon l'une quelconque des revendications 1 à 5, **caractérisé en ce que** le chauffe-eau instantané (17) et la station d'eau fraîche (12) sélectivement soit sont formés de manière espacée soit forment une unité constructive.

7. Dispositif selon l'une quelconque des revendications 2 à 6, **caractérisé en ce qu'**au moins un échangeur de chaleur supplémentaire (25) est associé au réservoir (21).

8. Dispositif selon l'une quelconque des revendications 1 à 7, **caractérisé en ce que** le chauffe-eau instantané (17) est disposé à proximité du point de débit ou de tirage (11).

9. Procédé de réchauffage d'eau potable pour au moins un point de débit ou de tirage (11) à l'aide d'un dispositif pour le réchauffement d'eau potable selon la revendication 1, comprenant les étapes de :
- amener de l'eau potable froide T_{K} dans une station d'eau fraîche (12),
- réchauffer un médium caloporteur M à l'aide d'un dispositif de chauffage (14),
- faire circuler le médium réchauffé M, à l'aide d'une pompe (15), par la station d'eau fraîche (12),
- transférer la chaleur à l'eau potable froide T_{K} à l'aide d'un échangeur de chaleur (16) et
- commander et/ou réguler la température de l'eau potable à l'aide d'un chauffe-eau instantané (17),
**caractérisé en ce que** l'ajustement d'une valeur de consigne de la température de l'eau potable dans la station d'eau fraîche (12) est effectué par le chauffe-eau instantané (17).

10. Procédé selon la revendication 9, **caractérisé en ce que** la station d'eau fraîche (12) commande et/ou règle, sur la base de la valeur de consigne, la vitesse de rotation de la pompe (15).

11. Procédé selon la revendication 9 ou 10, **caractérisé en ce que** le médium caloporteur M est réchauffé par une source de chaleur primaire (20) et stocké dans un réservoir.

12. Procédé selon l'une quelconque des revendications 9 à 11, **caractérisé en ce que** le médium caloporteur M circule dans un circuit fermé.

13. Procédé selon l'une quelconque des revendications 9 à 12, **caractérisé en ce que** la température d'entrée de l'eau potable déjà réchauffée T_{W} est mesurée à l'entrée du chauffe-eau instantané (17) et est utilisée pour déterminer l'ajustement de la valeur de consigne.

14. Procédé selon l'une quelconque des revendications 9 à 13, **caractérisé en ce que** les signaux de commande et/ou de régulation entre le chauffe-eau instantané (17) et la station d'eau fraîche (12) sont transmis sélectivement par une liaison câblée directe, un réseau et/ou une liaison radio.

15. Procédé selon l'une quelconque des revendications 9 à 14, **caractérisé en ce que** le chauffe-eau instantané (17) est actionné sélectivement via une commande à distance par radio, un câble et/ou un réseau.
